(19) **Europäisches Patentamt**

**European Patent Office**

**Office européen des brevets**

(11) **EP 1 464 734 A2**

(12) **EUROPÄISCHE PATENTANMELDUNG**

| | |
|---|---|
| (43) Veröffentlichungstag:<br>**06.10.2004 Patentblatt 2004/41** | (51) Int Cl.7: **C25D 17/00**, C25D 17/10,<br>C25D 21/12 |
| (21) Anmeldenummer: **04006287.9** | |
| (22) Anmeldetag: **17.03.2004** | |

| | |
|---|---|
| (84) Benannte Vertragsstaaten:<br>**AT BE BG CH CY CZ DE DK EE ES FI FR GB GR HU IE IT LI LU MC NL PL PT RO SE SI SK TR**<br>Benannte Erstreckungsstaaten:<br>**AL LT LV MK** | • **Schostek, Gerd**<br>**88339 Bad Waldsee (DE)**<br>• **Fuchs, Frank**<br>**64354 Reinheim (DE)**<br>• **Burns, Andrea, Dr.**<br>**63546 Hammersbach (DE)**<br>• **Lange, Gerlinde**<br>**63505 Langenselbold (DE)** |
| (30) Priorität: **21.03.2003 DE 10312767**<br>**24.03.2003 DE 10313080**<br>**17.05.2003 DE 10322321** | |
| (71) Anmelder: **DeguDent GmbH**<br>**63457 Hanau (DE)** | (74) Vertreter:<br>**Stoffregen, Hans-Herbert, Dr. Dipl.-Phys.**<br>**Patentanwalt**<br>**Postfach 21 44**<br>**63411 Hanau (DE)** |
| (72) Erfinder:<br>• **Kaschlik, Peter**<br>**07743 Jena (DE)** | |

(54) **Anordnung und Verfahren zur Herstellung von Formteilen**

(57)  Die Erfindung bezieht sich auf eine Anordnung und ein Verfahren zur Herstellung von Formteilen mit Hilfe galvanischer Metallabscheidung auf ein Werkstück (39), umfassend ein Gehäuse (10) mit einer ersten Abstellfläche (22) für ein einen Elektrolyten aufnehmendes erstes Behältnis (54), eine Halterung (30) und/oder Aufnahme (28), von der eine Anode (36) sowie zumindest eine Kathode (38, 40, 42, 44, 46) mit zu beschichtendem Werkstück ausgehen, sowie eine Heizeinrichtung (50, 52) für den Elektrolyten. Um mit einfachen Maßnahmen präzise Formteile herstellen zu können wird vorgeschlagen, dass die Anode (36) als ein Durchbrechungen aufweisender Hohlzylinder ausgebildet ist, dass die Heizeinrichtung (50, 52) innerhalb der Anode verläuft und von der Halterung (30) bzw. Aufnahme ausgeht und dass die Halterung bzw. Aufnahme sowohl anheb- und absenkbar als auch auf die erste Abstellfläche (22) sowie eine in dem Gehäuse (10) vorhandene zweite Abstellfläche (24) für ein Spülflüssigkeit enthaltendes zweites Behältnis ausrichtbar ist.

**EP 1 464 734 A2**

**Beschreibung**

Die Erfindung bezieht sich auf eine Anordnung zur Herstellung von Formteilen, insbesondere im Dentalbereich wie Kronen oder Brücke, mit Hilfe galvanischer Metallabscheidung auf ein Werkstück, umfassend ein Gehäuse mit einer ersten Abstellfläche für ein einen Elektrolyten aufnehmendes erstes Behältnis, eine Halterung und/oder eine Aufnahme, von der eine Anode sowie zumindest eine Kathode mit zu beschichtendem Werkstück ausgehen, sowie eine Heizeinrichtung für den Elektrolyten, wobei um die Anode herum die Referenzelektrode sowie die zumindest eine Kathode angeordnet sind.

Ferner nimmt die Erfindung Bezug auf ein Verfahren zum galvanischen Abscheiden von Metallen auf zumindest ein in einem Elektrolyten angeordnetes Werkstück zur Bildung eines Formteils, insbesondere eines Formteils im Dentalbereich wie Krone oder Brükke, wobei

- das Werkstück an einer Kathode befestigt wird, die in den Elektrolyten eingetaucht wird, in der sich eine Anode befindet,
- durch einen Vergleich eines gemessenen Strom-Spannungs-Verhaltens zwischen der Kathode und einer Referenzelektrode mit definierter Oberfläche mit einem Strom-Spannungs-Verhalten zwischen der Anode und der das Werkstück aufweisenden Kathode zu beschichtende Fläche $A_F$ des Werkstücks berechnet wird und
- in Abhängigkeit einer auf der berechneten Fläche $A_F$ des Werkstückes abzuscheidenden Metallschichtdicke zwischen der Kathode und der Anode ein Strom 1 über eine Zeit t mit einer Anfangsgröße $I_A$ und einer Endgröße $I_E$ mit $I_A > I_E$ fließt.

Eine entsprechende Anordnung ist der EP 0 555 263 BI zu entnehmen. Um gleichzeitig mehrere Werkstücke mit unbekannter Fläche mit Überzügen unter automatischer Regulierung versehen zu können, müssen die Abstände zwischen der Referenzelektrode und den einzelnen Werkstücken den Abständen dieser zu der Anode entsprechen und zudem die Werkstücke gleichmäßig um die Messsonde verteilt sein. Dabei werden durch die Messsonde die Spannung in dem an den Kathoden vorbei fließenden Elektrolyten gemessen, durch eine Steuerungseinrichtung die Ist- mit der Sollspannung im Elektrolyten verglichen und auf die Sollspannung eingestellt.

Ein galvanisches Abscheiden von Metallen auf Werkstücke zum Ausbilden von z. B. Inlays, Teilkronen oder Mesostrukturen in der Implantatprothetik ist mit dem Gerät AGC MikroPlus der Wieland Edelmetalle GmbH & Co., Pforzheim, durchführbar. Das Gerät weist eine zu einem Gehäuse anhebbare Halterung auf, die der Position der Kathoden entsprechende Durchbrechungen aufweist, durch die die Kathoden hindurchgeführt werden müssen, um mit elektrischen Anschlüssen des Gehäuses verbunden werden zu können. Der Elektrolyt wird durch eine in der Standfläche eines den Elektrolyten aufnehmenden Becherglas vorhandene Heizung erwärmt. Um Bechergläser unterschiedlicher Größe verwenden zu können, sind Adapter vorgesehen. Dadurch, dass der Elektrolyt von außen beheizt wird, besteht die Gefahr, dass sich Bedienpersonal verletzt.

Um den zum Abscheiden einer gewünschten Schichtdicke auf einem Stumpf notwendigen Strom, der zwischen Anode und der den Stumpf haltenden Kathode fließt, einzustellen, muss zuvor die zu beschichtende Fläche bestimmt werden. Hierzu wird das zu beschichtende Werkstück wie Brücken- oder Kronenmodell mit Referenzmustem einer Vergleichstabelle verglichen. Dieser sind Stromstufe und Goldbadmenge für den jeweiligen Stumpf und die jeweilige Schichtdicke zu entnehmen. Werden mehrere unterschiedliche Modelle bzw. Stümpfe gleichzeitig beschichtet, so wird empfohlen, die einzelnen Stromstufen und Goldbadmengen zu notieren und letztere sodann zu addieren. Mehrere Werkstücke können nur dann gleichzeitig beschichtet werden, wenn gleiche Schichtdicken gewünscht werden.

Aus der DE 198 45 506 A1 ist ein Verfahren zur Herstellung von prothetischen Formteilen für den Dentalbereich bekannt. Dabei erfolgt ein galvanisches Abscheiden durch Pulsstromabscheidung. Vorrichtungsmäßig wird eine Elektrolysezelle vorgeschlagen, bei der eine äußere Anode, die in Form eines zylindermantelförmigen Netzes aus platiniertem Titan ausgebildet sein kann, eine das Werkstück aufnehmende Kathode umgibt.

Aus dem Sonderdruck DE.Z.: Heft 1-2 und 3/98, ZMK, Magazin für Zahnheilkunde, Management und Kultur, ist es bekannt, Dentalformteile durch galvanisches Abscheiden herzustellen, wobei aus einem Vergleich des Strom-Spannungs-Verhaltens zwischen der Fläche einer in einem Elektrolyten eingebrachten Referenzelektrode zu einer unbekannten zu beschichtenden Werkstückfläche diese berechnet wird, die von einer in dem Elektrolyten eingetauchten Kathode ausgeht.

Aus DE 38 09 435 C2 ist ein Verfahren und eine Vorrichtung zur galvanischen Beschichtung einer inneren Krone bekannt, wobei eine Hilfselektrode eingesetzt wird und pulsierender Strom verwendet wird.

Das DE 89 11 651 U1 hat ein Galvanisiergerät zur Herstellung von Zahnersatzteilen zum Gegenstand.

Die DE 27 57 687 C2 bezieht sich auf ein Verfahren zur Bestimmung der eingetauchten Oberfläche einer der Elektroden eines elektrochemischen Bades, bei dem das Potenzial zwischen Elektrode und dem Elektrolyten gemessen wird, wobei kein Strom an das Bad angelegt wird. Unmittelbar nach dieser Messung wird ein Impuls mit bestimmter Ladung angelegt und das Potenzial ermittelt. Anschließend wird die Differenz zwischen beiden gemessenen Potenzialen festgestellt und der Wert dieser Differenz zur Bestimmung der Oberfläche verwendet, wobei berücksichtigt wird, dass das Verhältnis zwischen Impulsladung (Q), der eingetauchten Oberfläche der Elektrode (S) und der Differenz der gemessenen Potenziale ($\Delta U$) der Gleichung Q/S = f ($\Delta U$) entspricht, wobei f ($\Delta U$) in einem weiten Anwendungsgebiet praktisch konstant ist.

Bei einem aus der DE 26 05 669 A1 bekannten Verfahren zur Regelung der kathodischen Stromdichte in galvanischen Bädern wird eine Hilfsfunktion F für die gegenseitige Abhängigkeit der Galvanisierspannung U und des Galvanisierstroms 1 mit $I_0$ als Parameter rechnerisch und/oder messtechnisch ermittelt, wobei ausgehend von einem frei gewählten Anfangswert $U_1$ oder $I_1$, auf iterativem Weg und unter Einstellung von aus der Funktion F ermittelten Zwischenwerten U oder I schließlich der Galvanisierstrom $I_A$ oder die Galvanisierspannung $U_A$ eingeregelt wird.

Der vorliegenden Erfindung liegt das Problem zu Grunde, eine Anordnung sowie ein Verfahren zur Herstellung von Formteilen insbesondere im Dentalbereich derart weiterzubilden, dass die Formteile mit höherer Präzision hergestellt werden können, wobei auch die Möglichkeit eröffnet werden soll, Formteile unterschiedlicher Größen gleichzeitig mit unterschiedlichen Schichtdicken zu versehen. Ferner soll eine Vereinfachung der Handhabung erfolgen, wobei insbesondere sichergestellt werden soll, dass Elektrolytflüssigkeit beim Herausnehmen der Anode und der Kathode aus dem Elektrolyten zu keiner Verschmutzung führt. Auch soll sichergestellt werden, dass der Elektrolyt schnell aufheizbar ist, ohne dass die Gefahr einer Verletzung für das Bedienungspersonal erwächst.

Anordnungsgemäß wird das Problem im Wesentlichen dadurch gelöst, dass die Anode als ein Durchbrechungen aufweisender Hohlzylinder ausgebildet ist, dass die Heizeinrichtung innerhalb der Anode verläuft und von der Halterung und/oder der Aufnahme ausgeht und dass die Halterung und/oder der Aufnahme sowohl anheb- und absenkbar als auch auf die erste Abstellfläche sowie eine in dem Gehäuse vorhandene oder diesem zugeordnete zweite Abstellfläche für ein eine Spülflüssigkeit enthaltendes zweites Behältnis ausrichtbar ist.

Abweichend vom gattungsbildenden Stand der Technik wird eine Anode verwendet, die die Form eines Hohlzylinders mit Durchbrechungen aufweist, wobei insbesondere ein zylindermantelförmiges Netz, das aus Titan bestehen und/oder mit Platin beschichtet sein kann, vorgesehen ist. In dem von der Anode umgebenen Raum ist sodann die Heizeinrichtung angeordnet, so dass eine unmittelbare Erwärmung des Elektrolyten erfolgt. Hierdurch bedingt kann ein im Vergleich zum vorbekannten Stand der Technik schnelleres Aufheizen des Elektrolyten erfolgen. Auch ist eine Vergleichmäßigung der Temperatur innerhalb des Elektrolyten gegeben. Unabhängig hiervon sollte der Elektrolyt mittels einer Rühreinrichtung wie Magnetrührer durchmischt werden. Durch das schnellere Aufheizen des Elektrolyten verkürzt sich im eigentlichen Sinne die gesamte Dauer zum Beschichten eines Werkstückes, so dass höhere Durchsätze erzielt werden können.

Dadurch, dass die Anode, die Referenzelektrode sowie die Kathode von der Halterung und/oder der Aufnahme ausgehen, die automatisch anheb- und absenkbar sowie auf ein Spülbad umsetzbar ist, ist es nahezu ausgeschlossen, dass ein Verschmutzen mit dem Elektrolyten erfolgt. So kann der an den von der Halterung und/oder der Aufnahme ausgehenden Elementen noch vorhandene Elektrolyt beim Anheben aus dem Elektrolytbad abtropfen. Sodann erfolgt durch insbesondere horizontales Verstellen der Halterung und/oder der Aufnahme und Ausrichten auf das Spülbad und ein Absenken der Anode, der Kathode und der Referenzelektrode einschließlich der Heizung in das Spülbad unmittelbar ein Reinigen, ohne dass die Elemente beispielsweise zu einem Waschbecken getragen werden müssen, wie dies nach dem Stand der Technik häufig der Fall ist.

Des Weiteren ist vorgesehen, dass die insbesondere plattenförmige Halterung in dem Gehäuse bzw. einer mit diesem verbundenen Aufnahme verrastbar bzw. in dieser arretierbar ist. Hierdurch eröffnet sich die Möglichkeit, die Halterung von dem Gehäuse vollständig zu entfernen, so dass das Befestigen bzw. das Lösen der Kathoden erleichtert und vereinfacht wird. Die elektrisch leitenden Verbindungen zu den Elektroden, insbesondere Kathoden erfolgt dabei über in der Aufnahme vorhandene federnde Kontakte, so dass ein Hindurchführen durch Öffnungen in der Halterung und/oder der Aufnahme nicht erforderlich ist.

Die Aufnahme kann von einem Haltearm ausgehen, der mit einem in dem Gehäuse vorhandenen Antrieb verbunden ist, mittels dessen die Aufnahme anheb- und absenkbar und horizontal verschiebbar ist. Ferner können durch den Haltearm die zu den Kontakten führenden elektrischen Leiter geführt werden, die ihrerseits zu einer Stromversorgung bzw. - steuereinrichtung in dem Gehäuse führen.

Um insbesondere beim Entnehmen der Halterung mit den von diesen ausgehenden Kathoden aus dem Spülbad zu vermeiden, dass etwaig vorhandene Flüssigkeitstropfen herabfallen, sieht eine Weiterbildung vor, dass lösbar mit der Halterung ein Tropfenfänger verbindbar ist, der ein unterhalb der Kathoden verlaufendes Scheibenelement aufweist, durch das herabtropfende Flüssigkeit aufgefangen wird.

Ist nach dem Stand der Technik üblicherweise vorgesehen, dass die Kathoden in äquidistantem Abstand zu der Anode angeordnet sind, wird vorgeschlagen, dass die Kathoden in voneinander abweichenden Abständen sowohl zu der Anode als auch untereinander und auch in einem Abstand angeordnet werden können, der dem zwischen Referenzelektrode und Anode nicht entspricht, ohne dass das Beschichtungsergebnis negativ beeinflusst wird.

Um auch mit geringer Menge an Elektrolyten eine Beschichtung vorzunehmen, um also das in dem Elektrolyten vorhandene Metall optimal nutzen zu können, ist des Weiteren vorgesehen, dass zumindest das erste Behältnis aus einem bodenseitigen eine kegelstumpfförmige Geometrie aufweisenden ersten Abschnitt und einem sich anschließenden zylinderförmigen zweiten Abschnitt besteht. Durch den verjüngten Bodenbereich ist demzufolge mit relativ geringer Elektrolytmenge eine hinreichende Füllstandshöhe in dem Behältnis erzielbar, um sowohl die Anode als auch die von der Kathode ausgehenden Werkstücke im hinreichenden Umfang in den Elektrolyten eintauchen zu können. Der ein geringeres Volumen aufweisende Abschnitt kann auch eine Zylindergeometrie mit einem Durchmesser aufweisen, der geringer als der des oberen Abschnitts ist.

Ein Verfahren zum galvanischen Abscheiden von Metallen auf zumindest ein in einem Elektrolyten angeordnetes Werkstück zur Bildung eines Formteils, insbesondere eines Formteils im Dentalbereich wie Krone oder Brücke,

- wobei das Werkstück an einer Kathode befestigt wird, die in den Elektrolyten eingetaucht wird, in der sich eine Anode befindet,
- durch einen Vergleich eines gemessenen Strom-Spannungs-Verhaltens zwischen der Kathode und einer Referenzelektrode mit definierter Oberfläche mit einem Strom-Spannungs-Verhalten zwischen der Anode und der das Werkstück aufweisenden Kathode zu beschichtende Fläche $A_F$ des Werkstücks berechnet wird und
- in Abhängigkeit einer auf der berechneten Fläche $A_F$ des Werkstückes abzuscheidenden Metallschichtdicke zwischen der Kathode und der Anode ein Strom I über eine Zeit t mit einer Anfangsgröße $I_A$ und einer Endgröße $I_E$ mit $I_A > I_E$ fließt,

zeichnet sich durch die Verfahrensschritte aus:

- Anordnen einer Referenzelektrode mit freier bekannter elektrisch leitender Fläche $A_R$ in dem Elektrolyten,
- Beaufschlagen der Referenzelektrode mit einem definierten Strom $I_R$ und Messen der Spannung $U_R$ über der Referenzelektrode,
- Beaufschlagen der Kathode mit einem Strom und Einstellen auf einen Wert $I_F$, bei der die Spannung $U_F$ über der Kathode gleich oder in etwa gleich der Spannung $U_R$ ist,
- Berechnen der Fläche $A_F$ nach der Formel

$$A_F = A_R * \frac{I_F}{(I_R)} (1),$$

- Multiplizieren der nach der Formel (1) berechneten Fläche $A_F$ mit einem Korrekturfaktor k mit 0,8 < k < 1,2 und

- Steuern des Stroms zwischen der Anode und Kathode von dem Anfangswert $I_A$ auf den Endwert $I_E$ über eine Zeit t in Abhängigkeit von der berechneten Fläche $A_F$ und der auf dieser abzuscheidenden Schichtdicke, wobei der zwischen der Kathode und der Anode fließende Strom über der Zeit derart gesteuert wird, dass $I_E$ 0,3 $I_A \leq I_E \leq$ 0,1 $I_A$ beträgt.

Erfindungsgemäß ist vorgesehen, dass automatisch die zu beschichtende Fläche des Werkstücks berechnet wird, so dass der nach dem Stand der Technik notwendige optische Vergleich zwischen einem Werkstück und einer Vergleichstabelle entfällt. Somit kann mit hoher Genauigkeit die Fläche mit der Folge bestimmt werden, dass sehr genaue Formteile hoher Güte herstellbar sind.

Der zum automatischen Berechnen der zu beschichtenden Fläche benutzte Algorithmus beruht dabei auf folgenden physikalischen Gesetzmäßigkeiten:

(1) Omsches Gesetz

$$I = \frac{U}{R}$$

(2) R-Bemessungsregeln

$$R = \rho * {}^{L}/_{A}$$

$\rho$ = spez.Widerstand des Elektrolyten (Galvanobades)
L = mittl. Abstand Kathode-Anode
A = Oberfläche der Kathode (Oberfläche der Anode kann vernachlässigt werden
wenn $A_{anode} > 10* A_{kathode}$)
(3) Stromdichte:

$$S = \frac{I}{A}$$

Einsetzen von (1) und (2) in (3) führt zu:

$$S = \frac{U}{\rho * L}$$

Bei $L_F = L_R$ und $p = const.$ folgt für

$$U_F = U_R = U:$$

$$S_F = S_R$$

$$I_F/A_R = I_R/A_R$$

$$A_F = A_R * \frac{I_F}{I_R}$$

Hieraus ergibt sich der Algorithmus:

- Ausgabe eines definierten Stromes auf die Referenzelektrode (z. B. $I_R$ = 5mA)
- Messung der Spannung über der Referenz-Elektrode (z. B. $U_R$ = 500 mV)
- Strom an dem Werkstück (Probe) schrittweise so verändern, bis $U_F = U_R$ +/- 1%
- Berechnung der Oberfläche der Probe aus der bekannten Oberfläche der Referenzelektrode und dem Verhältnis der Ströme nach obiger Gleichung.

Ist bei den zuvor wiedergegebenen Berechnungen davon ausgegangen, dass der Abstand der Referenzelektrode zu Anode gleich dem zwischen Kathode, also Werkstück und der Anode ist, so kann auch ein hiervon abweichender unterschiedlicher Abstand gewählt werden. Hierzu wird der Korrekturfaktor K berücksichtigt, der zwischen 0,8 und 1,2 liegt. Somit besteht erfindungsgemäß die Möglichkeit, gleichzeitig mehrere Werkstücke zu beschichten, die von Kathoden ausgehen, die zu der Anode unterschiedliche Abstände bzw. einen zu zwischen Referenzelektrode und Anode verlaufenden abweichenden Abstand aufweisen.

Ist automatisch die zu beschichtende Fläche bestimmt worden, kann unter Zugrundelegung der gewünschten Schichtdicke automatisch nach in einem Rechner wie Microcontroller abgelegten Strom-Zeitkurven das galvanische Abscheiden des Metalls auf der berechneten Fläche erfolgen, wobei bei der Abscheidung von Gold folgende Beziehungen berücksichtigt werden:

Es gilt die folgende Berechnungsgleichungen:

$$m_{Au} = \frac{19,32 * A * S}{10^6}$$

Dabei ist:

$m_{Au}$... Goldmasse in g
S... geforderte Schichtdicke in $\mu$m
A... die berechnete Probenoberfläche in $mm^2$
Dichte von Gold = 19,32 $g/cm^3$

Ermittlung der Prozessgrößen

A. Physikalische-chemische Grundlagen

Faradaysches Gesetz

$$m = Ä * Q \quad (4)$$

Ä = elektrochemisches Äquivalent

Für Gold:

$$Ä_{Au} = \frac{M}{n * F} = 2,038 * 10^{-3} \frac{g}{As} = 7,34 \frac{g}{Ah}$$

M = molare Masse für Gold = 196,66 g/mol
F = Faradaysche Konstante = 96486 As/mol
n = wirksame Wertigkeit der Au-Ionen = 1

Ladungsmenge

$$Q(t) = \int_0^1 I(t) dt$$

Q (t) ... Ladungsmenge (zeitl. veränderlich)
I(t)....... Galvanisierstrom (zeitl. veränderlich)
t........... Galvanisierzeit

B. Berechnung der erforderlichen Ladungsmenge:

Aus (4) ergibt sich:

$$Q = m_{Au}/Ä_{Au} = m_{au} * 490,62$$

$M_{Au}$... errechnete Goldmasse in g
Q... Ladungsmenge in As

Die Ladungsmenge Q in As entspricht somit der Fläche unterhalb des Stromkurve in einem Strom-Zeitdiagramm.

Aus den in dem Rechner abgelegten Strom-Zeitkurven kann sodann diejenige ausgewählt werden, die einer Ladungsmenge entspricht, die zum Auftragen der erforderlichen Schichtdicke bei bekannter Fläche und molarer Masse des aufzutragenden Metalls erforderlich ist. Dabei können optimale Stromdichten in Abhängigkeit vom Metallgehalt des Elektrolyten eingehen, um optimale Abscheideergebnisse zu erzielen.

Gegebenenfalls kann der Galvanisierprozess an einer Kathode unterbrochen werden, wenn über der Kathode ein Spannungsabfall messbar ist, der einen vorgegebenen Wert überschreitet. Hierzu können in regelmäßigen Abständen die Spannungen über den Kathoden gemessen werden.

Da erfindungsgemäß die zu beschichtende Fläche eines Werkstücks automatisch ermittelt und sodann der zum Abscheiden der erforderlichen Schichtdicke notwendige Stromfluss und dessen Zeitdauer aus in dem Rechner abgelegten Strom-Zeitkurven abgerufen wird, besteht die Möglichkeit, gleichzeitig Werkstücke mit unterschiedlichen Schichtdicken zu beschichten, da der Stromfluss individuell zwischen Anode und jeweiligem Werkstück bzw. Kathode einstellbar ist.

Auch besteht erfindungsgemäß die Möglichkeit, dass die Zeitdauern des Beschichtens unterschiedlich sind. In diesem Fall ist erfindungsgemäß vorgesehen, dass nach Beendigung eines Beschichtungsvorgangs die entsprechende Kathode mit einem Ruhestrom, der zeitlich konstant ist, beaufschlagt wird, um eine Qualitätsminderung des Formteils zu verhindern.

Des Weiteren ist vorgesehen, dass der Strom während der galvanischen Abscheidung derart gesteuert wird, dass sich eine stetige Reduzierung über die Zeit ergibt.

Alternativ besteht die Möglichkeit, die Abscheidung des Metalls durch zwischen der Anode und der Kathoden fließenden pulsierenden Strom zu bewirken, wobei sich der pulsierende Strom durch insbesondere rechteckförmige oder rampenförmige Stromimpulse ergibt.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:

Fig. 1     eine Anordnung zur Herstellung von Formteilen in Vorderansicht,

Fig. 2     die Anordnung gemäß Fig. 1 in Seitenansicht,

Fig. 3     die Anordnung nach den Fig. 1 und 2 in Rückansicht,

Fig. 4     die Anordnung nach Fig. 1 bis 3 in Draufsicht,

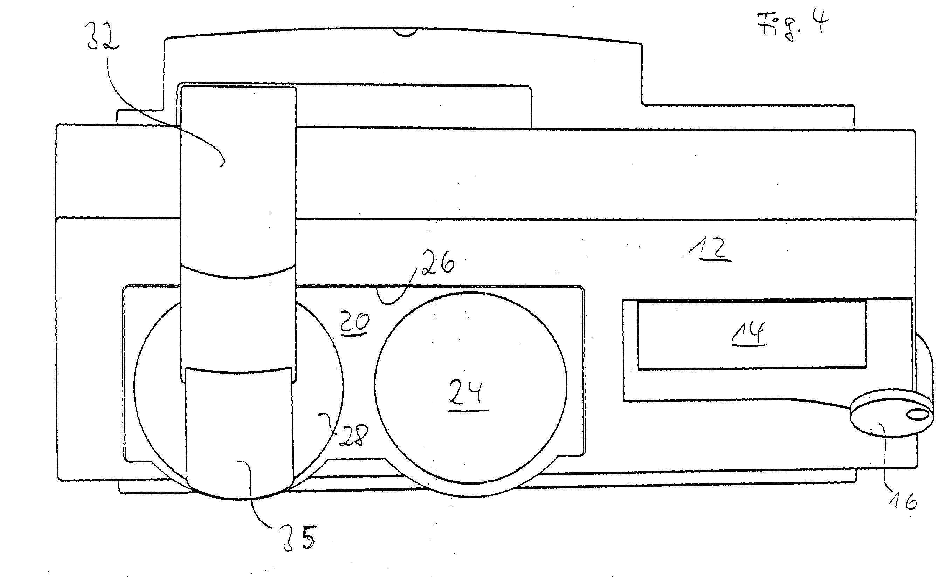

Fig. 5     eine Seitenansicht eines Tropfenfängers,

Fig. 6     der Tropfenfänger nach Fig. 5 in Vorderansicht,

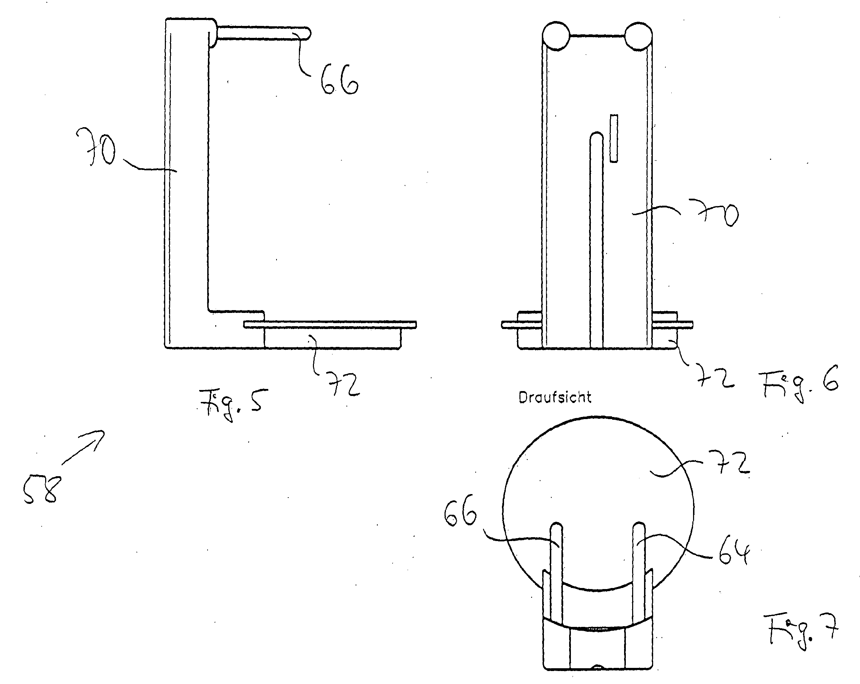

Fig. 7     der Tropfenfänger nach den Fig. 5 und 6 in Draufsicht,

Fig. 8     ein Elektrolytbehältnis und

Fig. 9     ein Strom-Zeitdiagramm.

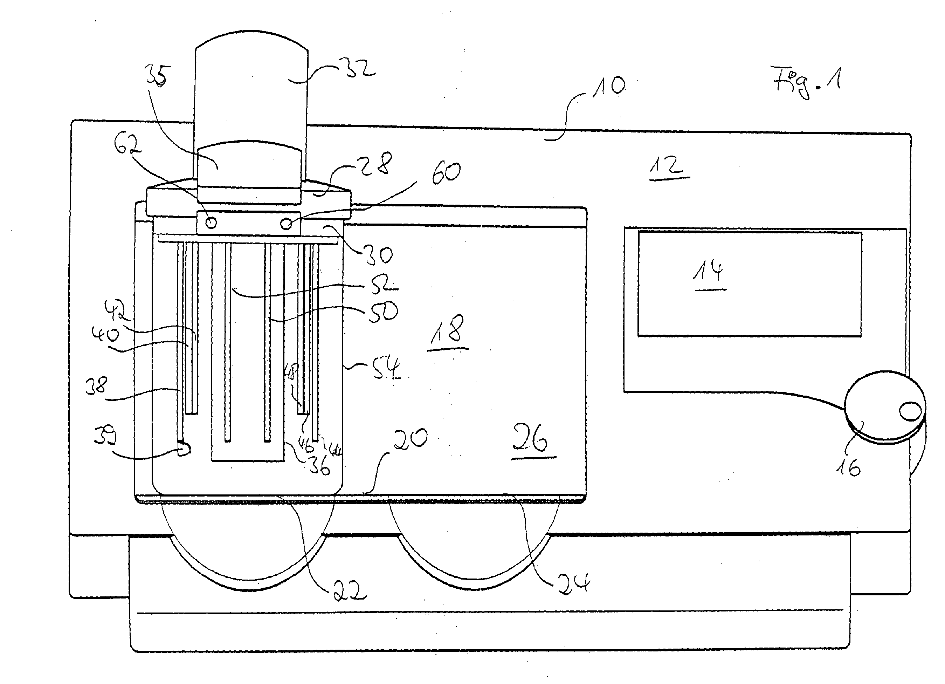

In den Fig. 1 bis 4 ist prinzipiell eine Anordnung zum Beschichten von Werkstücken mit Hilfe galvanischer Metallabscheidung zur Herstellung von Formteilen insbesondere für den Dentalbereich dargestellt. Bei den Formteilen kann es sich um Kronen, Teilkronen, Inlays, Ankerkronen für kleine Brücken handeln, die gegebenenfalls mit Keramik- bzw. Kunststoffverblendungen versehen werden. Als Formteile sind jedoch auch Mesostrukturen in der Implantatprothetik, Prothesenbasen, Pfosten und Sekundärkronen in der Doppelkronen-Technik zu verstehen, um nur beispielhaft einige Elemente zu nennen.

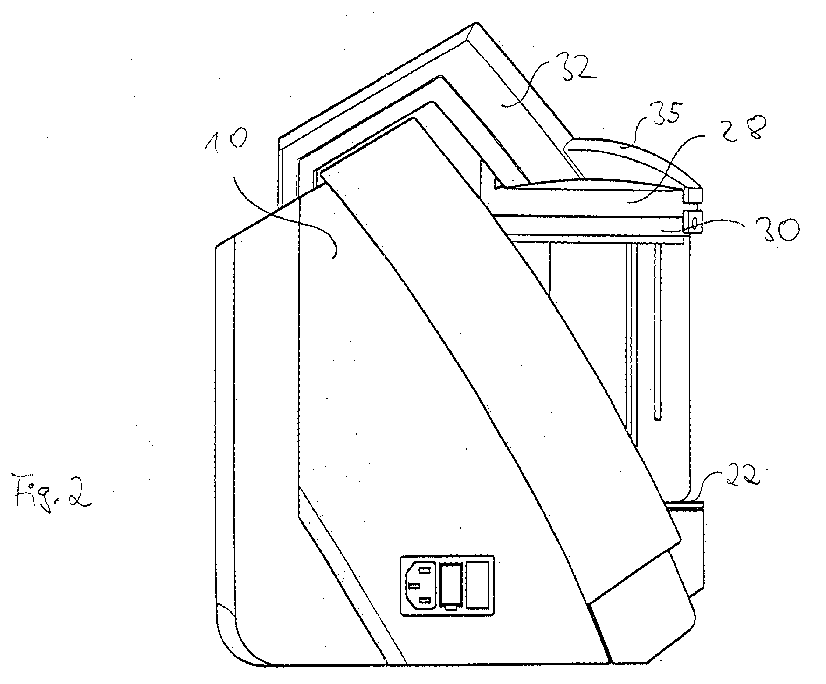

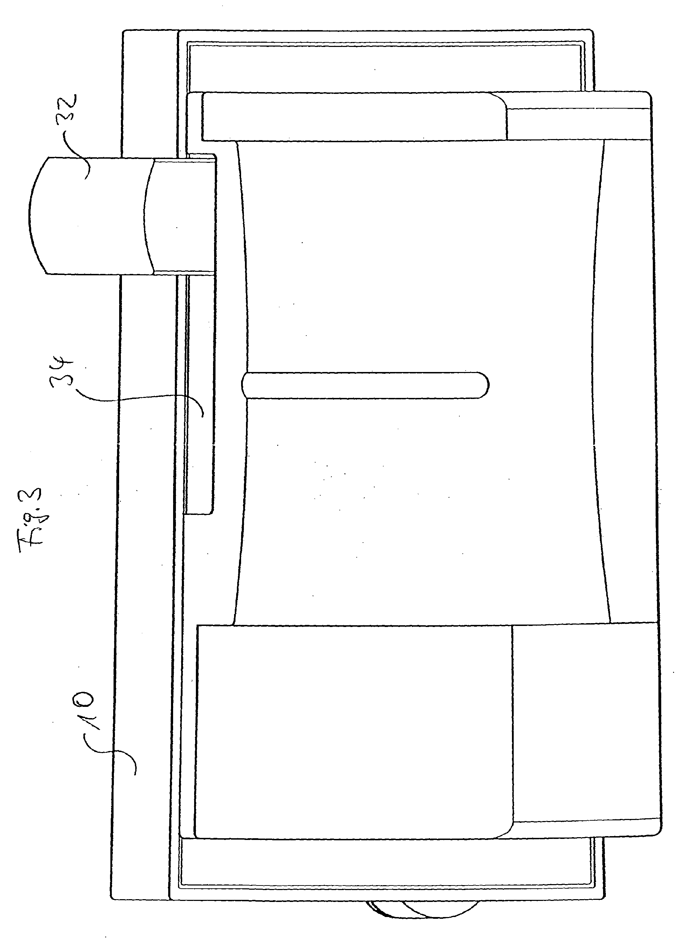

Die Anordnung umfasst ein Gehäuse 10, in dessen Frontfläche 12 ein Display 14 mit Schalter 16 sowie eine im Schnitt dreieckförmige zurückversetzte Aussparung 18 vorhanden ist, die eine bei Betrieb horizontal oder im Wesentlichen horizontal verlaufende Fläche 20 mit einer ersten und einer zweiten Abstellfläche 22, 24 aufweist. Rückseitig ist die Aussparung 18 von einer senkrecht zu der Fläche 20 verlaufenden Rückwandung 26 begrenzt. Losgelöst hiervon verläuft die Frontfläche des Gehäuses 10 geneigt zur Horizontalen, wie insbesondere die Fig. 2 und 4 verdeutlichen.

Entlang der Aussparung 18 bzw. der Fläche 20 ist eine Aufnahme 28 für eine Halterung 30 verstellbar angeordnet. Die Aufnahme 28 geht dabei von einem abgewinkelten Haltearm 32 aus, der rückseitig durch einen Schlitz 34 in das Innere des Gehäuses 10 geführt und mit einem Antrieb verbunden ist, um den Haltearm 32 anheben und absenken und entlang des Schlitzes 34 verstellen zu können. Dabei weist der Schlitz 34 eine Erstreckung derart auf, dass die Aufnahme 28 sowohl auf die erste Abstellfläche 22 als auch auf die zweite Abstellfläche 24 ausrichtbar ist.

Die lösbar und über ein Hebelelement 35 arretierbare Halterung 30 nimmt für den Galvanisierprozess erforderliche Elektroden wie eine hohlzylinderförmige Anode 36 mit Durchbrechungen sowie diese peripher umgebende Kathoden 38, 40, 42, 44, 46 sowie eine Referenzelektrode 48 auf, die über von der Aufnahme 28 ausgehende federvorgespannte Kontakte mit elektrischen Verbindungen kontaktierbar sind, die zu einer in dem Gehäuse 10 vorhandenen Stromsteuerung führen.

Von der Anode 36 umgeben geht von der Aufnahme 28 des Weiteren eine Heizeinrichtung - im Ausführungsbeispiel in Form von Heizstäben 50, 52 - aus, die in Glas eingekapselt sind.

Sind zeichnerisch zwei Heizstäbe 50, 52 dargestellt, so kann die Heizeinrichtung selbstverständlich auch nur einen Heizstab oder ein gleichwirkendes Element oder mehr als zwei Heizstäbe aufweisen.

Entsprechend der Anzahl der zu beschichtenden Werkstücke 39 zur Ausbildung der Formteile werden Kathoden 38, 40, 42, 44, 46 in die Halterung 30 eingesetzt. Hierzu ist die Halterung 30 von der Aufnahme 28 abgezogen worden. Bei den Werkstücken 39 handelt es sich vorzugsweise um Gipsmodelle, die in den Bereichen, die beschichtet werden sollen, mit einem elektrisch leitfähigen Lack wie Silber- oder Goldleitlack versehen sind. Diese Bereiche sind mit den Zuleitungen der Kathoden 38, 40, 42, 44, 46 elektrisch leitend verbunden.

Die Halterung 30 mit den entsprechenden Kathoden 38, 40, 42, 44, 46 und der Referenzelektrode 48 wird sodann in die Aufnahme 28 eingeschoben und mittels des Hebels 35 fixiert. Dies erfolgt bei angehobener Aufnahme 28. Dabei ist der lichte Abstand zwischen den unteren Enden der Elektroden und der ersten Abstandsfläche 22 so gewählt, dass auf diese ein Becherglas 54 gestellt werden kann, in dem sich ein Elektrolyt mit einem Metall oder einer Metalllegierung befindet, das bzw. die auf den Werkstücken abgeschieden werden soll. Insbesondere handelt es sich bei den Elektrolyten um ein wässriges Gold- oder Goldlegierungsbad. Dabei ist die Füllmenge in dem Becherglas 54 derart, dass sowohl die Anode 36 als auch die Werkstücke 39, die an den Kathoden 38, 40, 42, 44, 46 befestigt sind, mit dem Elektrolyten bedeckt sind.

Die Referenzelektrode 48, die mit zumindest einer Fläche $A_R$ in dem Elektrolyten eintaucht, geht von der Halterung 30 oder insbesondere von der Aufnahme 28 aus.

Sodann erfolgt ein Beheizen des Elektrolyten mittels der Heizstäbe 50, 52. Ferner kann der Elektrolyt mittels eines nicht dargestellten Magnetrührers vermischt werden, um einen Temperaturgradienten innerhalb des Elektrolyten im Bereich zwischen der Anode 36 und den Kathoden 38, 40, 42, 44, 46 und der Referenzelektrode 48 auszuschließen.

Nachdem der Elektrolyt - auch Galvanobad genannt - auf die gewünschte Temperatur auf geheizt worden ist, folgt nach der erfindungsgemäßen Lehre ein automatisches Berechnen der jeweiligen zu beschichtenden Fläche der in dem Elektrolyten vorhandenen Werkstücke 39.

So wird zunächst ein definierter Stromfluss zwischen Anode 36 und Referenzelektrode 48 eingestellt und die Spannung über die Referenzelektrode 48 gemessen. Sodann wird jeweils jede Kathode 38, 40, 42, 44, 46 bzw. das mit dieser verbundene Werkstück 39 für sich mit einem Strom beaufschlagt, der derart verändert wird, dass sich an der jeweiligen Kathode 38, 40, 42, 44, 46 bzw. dem Werkstück 39 ein Spannungsabfall ergibt, der dem der Referenzelektrode 48 entspricht. Hieraus ergibt sich automatisch die zu beschichtende Fläche eines jeden Werkstückes nach der Formel

$$A_F = AR * \frac{I_F}{I_R}$$

mit

$A_F$ = Fläche des zu beschichtenden Werkstücks,
$A_R$ = bekannte Fläche der Referenzelektrode,
$I_R$ = die Referenzelektrode 48 durchfließender Strom,
$I_F$ = das jeweilige Werkstück durchfließender Strom.

Nachdem für jedes Werkstück 39 die Fläche automatisch bestimmt worden ist, wird sodann über die Tastatur wie Drehschalter 16 für jedes Werkstück die gewünschte Schichtdicke eingegeben. Dies erfolgt vorzugsweise bereits vor dem Aufheizen der Elektrolyten. Durch den in dem Gerät 10 integrierten Rechner wird sodann die für sämtliche in dem Elektrolyten befindliche Werkstücke erforderliche Metall- wie Goldmenge berechnet und auf dem Display 14 angezeigt, wieviel Elektrolytflüssigkeit hierzu benötigt wird. Gleichzeitig wird von in dem Rechner abgelegten Strom-Zeit-Kurven für jedes Werkstück 39 diejenige abgerufen, die optimale Stromdichten in Abhängigkeit von dem Metallgehalt in dem Elektrolyten unter Berücksichtigung der aufzutragenden Schichtdicke ermöglicht.

Des Weiteren wird aufgrund von im Rechner abgelegten Daten Temperatur des Elektrolyten und/ oder Rührgeschwindigkeit während des galvanischen Prozesses in Abhängigkeit von Anzahl zu beschichtender Werkstücke und/oder Elektrolytmenge und/oder Elektrolytfüllstandshöhe auf einen konstanten oder auf einen sich während des Prozesses ändernden Wert eingestellt.

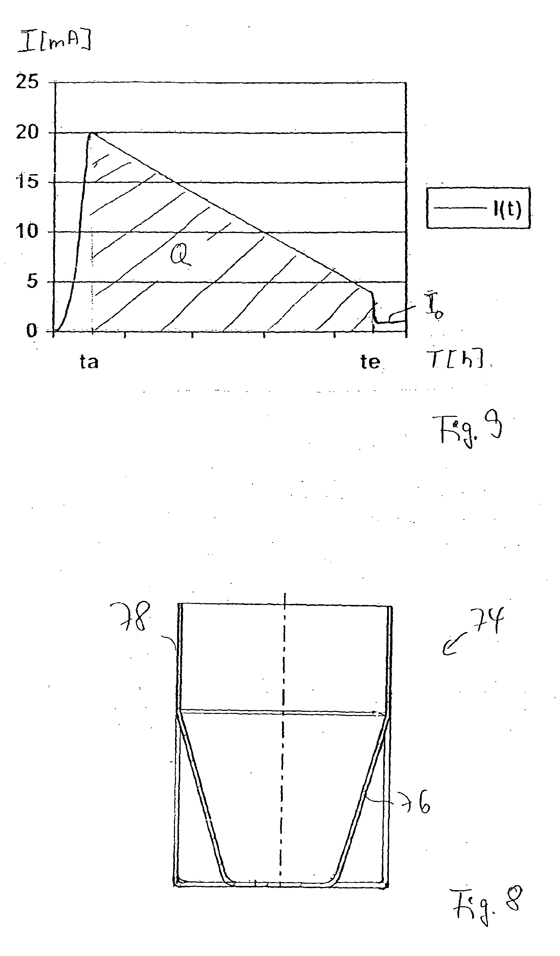

Der individuell zwischen der Anode 36 und dem jeweiligen mit der Kathode 38, 40, 42, 44, 46 verbundenen Werkstück 39 fließende Strom folgt dabei in seiner Größe über der Zeit einer Kurve, die prinzipiell der Fig. 9 zu entnehmen ist. Bei Beginn des Beschichtungsprozess, also zum Zeitpunkt $t_A$ fließt im Ausführungsbeispiel ein Strom $I_A$ von 20 mA und zum Ende der Beschichtung (Zeitpunkt $t_E$) ein Strom mit einem Wert $I_E$, der in etwa 0,2 des Anfangswertes entspricht. Die Fläche unter der Stromkurve muss dabei der Ladungsmenge in A . sec. entsprechen, die zum Abscheiden der errechneten Goldmasse in Gramm zur Erzielung der gewünschten Schichtdicke notwendig ist.

Da erfindungsgemäß mehrere Werkstücke 39 gleichzeitig beschichtet werden können, ohne dass notwendigerweise der jeweilige Beschichtungsprozess zum selben Zeitpunkt endet, fließt zwischen der Anode 36 und dem Werkstück, bei dem die Beschichtung abgeschlossen ist, ein geringer Ruhestrom, der sicherstellen soll, dass eine Qualitätsminderung der Beschichtung und somit des herzustellenden Formlings unterbleibt.

Nachdem sämtliche Werkstücke beschichtet sind, wird die Aufnahme 28 über den Arm 32 in einem Umfang angehoben, dass die Elektroden oberhalb des Behältnisses 54 verlaufen. In dieser Zeit kann an den Elektroden bzw. der Heizung bzw. deren Umkapselung vorhandene Elektrolytflüssigkeit abtropfen. Sodann wird automatisch die Aufnahme 28 auf die zweite Abstellfläche 24 ausgerichtet, auf der in einem weiteren Behältnis sich eine Spülflüssigkeit befindet.

Insbesondere ist jedoch vorgesehen, dass das weitere Behältnis einen Gipslöser enthält, um das aus Gips bestehende Werkstück 39 aufzulösen und somit die hergestellten Formteile losgelöst von dem Werkstückmaterial zu erhalten.

Als Gipslöser sind insbesondere folgende Verbindungen oder Mischungen dieser geeignet:

- Komplexbildner wie EDTA (Ethylendiamintetraessigsäure) und/oder deren Salze, gegebenenfalls in Kombination mit Säure wie Citronensäure,
- Zuckerlösungen gegebenenfalls in Kombination mit Citronensäure,

- Säuren,
- Glycerin.

Dabei sollten die Mischungen, insbesondere die von Komplexbildnern, auf einen alkalischen pH-Wert (ca. 8 - 11) eingestellt werden.

Um beschleunigt ein Lösen des Gips zu erzielen, sollte des Weiteren die Lösung auf eine Temperatur im Bereich zwischen 20 °C und 90 °C, vorzugsweise zwischen 45 °C und 65 °C eingestellt werden. Das Auflösen kann auch dadurch beschleunigt werden, dass die Lösung umgerührt wird. Gegebenenfalls kann zusätzlich eine Ultraschallbeaufschlagung erfolgen.

Nach dem Abspülen der Elektroden sowie der Verkapselung der Heizung bzw. dem Lösen des Gipswerkstoffs wird die Aufnahme 28 erneut angehoben, um sodann die Halterung 30 mit den Kathoden 38, 40, 42, 44 und 46 und der Referenzelektrode 48, sofern diese von der Halterung ausgeht, entfernen zu können. Um beim Transport der Halterung 30 ein Herabtropfen auszuschließen, kann ein sogenannter Tropfenfänger 58 auf die Halterung 30 auf geschoben werden. Hierzu weist die Halterung 30 in ihrem Frontbereich Öffnungen 60, 62 auf, in die stiftförmige Vorsprünge 64, 66 des Tropfenfängers 58 einbringbar sind. Der Tropfenfänger 58 besteht aus einem senkrecht zu den Vorsprüngen 64, 66 verlaufenden ersten Abschnitt 70, dessen Länge größer als maximale Längenerstreckung der von der Halterung 30 ausgehenden Elemente, also Elektroden und Heizung ist. Der Abschnitt 70 geht sodann in einen tellerförmigen Abschnitt 72 über, der bei mit der Halterung 30 verbundenen Tropfenfänger 58 unterhalb der Elektroden und der Heizung verläuft.

Mit anderen Worten weist der Tropfenfänger 58 im Schnitt eine L-Geometrie auf, dessen bei Nutzung vertikal verlaufender Schenkel 70 der erste Abschnitt und dessen horizontaler Schenkel als Auffänger für Flüssigkeitstropfen dient.

Um auch mit geringer Elektrolytmenge eine hinreichende Füllstandsmenge zu erreichen, die erforderlich ist, die Elektroden im erforderlichen Umfang zu bedecken, kann entsprechend der Darstellung der Fig. 8 ein Behältnis 74 genutzt werden, das sich aus einem einer Kegelstumpfgeometrie folgenden bodenseitigen ersten Abschnitt 76 und einem sich anschließenden zylindrischen zweiten Abschnitt 78 zusammensetzt. Hierdurch ergibt sich der Vorteil, dass auch dann, wenn nur eine geringe Elektrolyt-Flüssigkeitsmenge erforderlich ist, um gewünschte Schichtdicken auf einem oder mehreren Werkstücken aufzutragen, sich die erforderliche Flüssigkeitshöhe in dem Behältnis 74 befindet, in die die Elektroden eintauchen.

**Patentansprüche**

1. Anordnung zur Herstellung von Formteilen, insbesondere im Dentalbereich wie Kronen oder Brücken, mit Hilfe galvanischer Metallabscheidung auf ein Werkstück (39), umfassend ein Gehäuse (10) mit einer ersten Abstellfläche (22) für ein einen Elektrolyten aufnehmendes erstes Behältnis (54, 74), eine Halterung (30) und/oder einer Aufnahme (28), von der eine Anode (36) sowie zumindest eine Kathode (38, 40, 42, 44, 46) mit zu beschichtendem Werkstück ausgehen, sowie eine Heizeinrichtung (50, 52) für den Elektrolyten, wobei um die Anode herum die Referenzelektrode sowie die zumindest eine Kathode angeordnet sind,
   **dadurch gekennzeichnet,**
   **dass** die Anode (36) als ein Durchbrechungen aufweisender Hohlzylinder ausgebildet ist, dass die Heizeinrichtung (50, 52) innerhalb der Anode verläuft und von der Halterung (30) und/oder der Aufnahme (28) ausgeht und dass die Halterung und/oder die Aufnahme sowohl anheb- und absenkbar als auch auf die erste Abstellfläche (22) sowie eine in dem Gehäuse (10) vorhandene oder diesem zugeordnete zweite Abstellfläche (24) für ein eine Spülflüssigkeit enthaltendes zweites Behältnis ausrichtbar ist.

2. Anordnung nach Anspruch 1,
   **dadurch gekennzeichnet,**
   **dass** mehrere Kathoden (38, 40, 42, 44, 46) um die Anode (36) herum angeordnet sind.

3. Anordnung nach Anspruch 1 oder 2,
   **dadurch gekennzeichnet,**
   **dass** die Kathoden (38, 40, 42, 44, 46) gleiche oder voneinander abweichende Abstände zu der Anode (36) aufweisen.

4. Anordnung nach zumindest einem der vorhergehenden Ansprüche,
   **dadurch gekennzeichnet,**
   **dass** die Halterung (30) plattenförmig ausgebildet ist und in dem Gehäuse (10) oder einer mit diesem verbundenen Aufnahme (28) verrastbar oder in dieser arretierbar ist.

5. Anordnung nach zumindest einem der vorhergehenden Ansprüche,
   **dadurch gekennzeichnet,**
   **dass** die Aufnahme (28) über zumindest einen Haltearm (32) mit einem in dem Gehäuse (10) vorhandenen Antrieb verbunden ist, mittels dessen die Aufnahme sowohl anheb- und absenkbar als auch horizontal verschiebbar ist.

6. Anordnung nach zumindest einem der vorhergehenden Ansprüche,
   **dadurch gekennzeichnet,**
   **dass** die Kathode oder die Kathoden (38, 40, 42, 44, 46) über federnde Kontakte mit einer Stromver-

**7.** Anordnung nach zumindest einem der vorhergehenden Ansprüche, **dadurch gekennzeichnet,** **dass** elektrische Verbindungen zwischen der Stromversorgung und den in der Aufnahme (28) vorhandenen Kontakten innerhalb des zumindest einen Haltearms (32) sowie der Aufnahme verlaufen.

**8.** Anordnung nach zumindest einem der vorhergehenden Ansprüche, **dadurch gekennzeichnet,** **dass** lösbar mit der Halterung (30) ein Tropfenfänger (58) verbindbar ist, der ein unterhalb der Anode (36), der Referenzelektrode (48) sowie der Kathode oder der Kathoden (38, 40, 42, 44, 46) verlaufendes Scheibenelement (72) aufweist.

**9.** Anordnung nach zumindest einem der vorhergehenden Ansprüche, **dadurch gekennzeichnet,** **dass** zumindest das erste Behältnis (74) aus einem bodenseitig eine kegelstumpfförmige Geometrie aufweisenden ersten Abschnitt (76) und einem sich anschließenden zylinderförmigen zweiten Abschnitt (78) besteht.

**10.** Anordnung nach zumindest einem der vorhergehenden Ansprüche, **dadurch gekennzeichnet,** **dass** von abstellflächenseitig verlaufendem von der Halterung (30) umgebenen Bereich der Aufnahme (28) die Anode (36) und die von der Anode umgebene Heizeinrichtung (50, 52) ausgehen.

**11.** Anordnung nach Anspruch 9, **dadurch gekennzeichnet,** **dass** der bodenseitige eine kegelstumpfförmige Geometrie aufweisende erste Abschnitt (76) von einem Zylinderabschnitt umgeben ist, dessen Querschnitt dem des zweiten Abschnitts (78) entspricht.

**12.** Verfahren zum galvanischen Abscheiden von Metallen auf zumindest ein in einem Elektrolyten angeordnetes Werkstück zur Bildung eines Formteils, insbesondere eines Formteils im Dentalbereich wie Krone oder Brücke, wobei

- das Werkstück an einer Kathode befestigt wird, die in den Elektrolyten eingetaucht wird, in der sich eine Anode befindet,
- durch einen Vergleich eines gemessenen Strom-Spannungs-Verhaltens zwischen der Kathode und einer Referenzelektrode mit definierter Oberfläche mit einem Strom-Spannungs-Verhalten zwischen der Anode und der das Werkstück aufweisenden Kathode zu beschichtende Fläche $A_F$ des Werkstücks berechnet wird und

- in Abhängigkeit einer auf der berechneten Fläche $A_F$ des Werkstückes abzuscheidenden Metallschichtdicke zwischen der Kathode und der Anode ein Strom I über eine Zeit t mit einer Anfangsgröße $I_A$ und einer Endgröße $I_E$ mit $I_A > I_E$ fließt,

**gekennzeichnet durch** die Verfahrensschritte,

- Anordnen einer Referenzelektrode mit freier bekannter elektrisch leitender Fläche $A_R$ in dem Elektrolyten,
- Beaufschlagen der Referenzelektrode mit einem definierten Strom $I_R$ und Messen der Spannung $U_R$ über der Referenzelektrode,
- Beaufschlagen der Kathode mit einem Strom und Einstellen auf einen Wert $I_F$, bei der die Spannung $U_F$ über der Kathode gleich oder in etwa gleich der Spannung $U_R$ ist,
- Berechnen der Fläche $A_F$ nach der Formel

$$A_F = A_R * \frac{I_F}{I_R}(1),$$

- Multiplizieren der nach der Formel (1) berechneten Fläche $A_F$ mit einem Korrekturfaktor k mit $0,8 < k < 1,2$ und
- Steuern des Stroms zwischen der Anode und Kathode von dem Anfangswert $I_A$ auf den Endwert $I_E$ über eine Zeit t in Abhängigkeit von der berechneten Fläche $A_F$ und der auf dieser abzuscheidenden Schichtdicke, wobei der zwischen der Kathode und der Anode fließende Strom über der Zeit derart gesteuert wird, dass $I_E$ 0,3 $I_A \leq I_E \leq$ 0,1 IA beträgt.

**13.** Verfahren nach Anspruch 12, **dadurch gekennzeichnet,** **dass** in Abhängigkeit der automatisch berechneten Fläche $A_F$ unter Einbeziehung des Korrekturfaktors k und aufzutragender Schichtdicke des Metalls die Steuerung des zwischen der Kathode und der Anode in dem Elektrolyten fließenden Stroms nach in einem Rechner abgelegten Strom-Zeit-Kurven erfolgt.

**14.** Verfahren nach Anspruch 12 oder 13, **dadurch gekennzeichnet,** **dass** in dem Elektrolyten gleichzeitig mehrere Werkstücke mit unterschiedlichen Schichtdicken beschichtet werden.

**15.** Verfahren nach einem der Ansprüche 12 bis 14 **dadurch gekennzeichnet,**

**dass** bei gleichzeitigem Beschichten mehrerer Werkstücke die Zeitdauer der zwischen der Anode und der jeweiligen Kathode fließenden Ströme unterschiedlich eingestellt wird.

16. Verfahren nach einem der Ansprüche 12 bis 15, **dadurch gekennzeichnet,** **dass** die Abscheidung des Metalls durch zwischen der Anode und der Kathode fließenden pulsierenden Strom erfolgt.

17. Verfahren nach einem der Ansprüche 12 bis 16, **dadurch gekennzeichnet,** **dass** sich der pulsierende Strom aus rechteckförmigen oder rampenförmigen Stromimpulsen zusammensetzt.

18. Verfahren nach einem der Ansprüche 12 bis 17, **dadurch gekennzeichnet,** **dass** nach Beendigung der Beschichtung eines Werkstücks und Verbleiben dieses in dem Elektrolyten zwischen dem Werkstück und der Anode ein Ruhestrom fließt.

19. Verfahren nach vorzugsweise einem der Ansprüche 12 bis 18, **dadurch gekennzeichnet,** **dass** nach dem Beschichten sämtlicher in dem Elektrolyten vorhandener Werkstücke die von einer Halterung ausgehenden Kathoden, die Anode und die Referenzelektrode aus dem Elektrolyten angehoben und automatisch in ein neben dem Elektrolyten vorhandenes Spülbad eingebracht werden.

20. Verfahren nach einem der Ansprüche 12 bis 19, **dadurch gekennzeichnet,** **dass** Temperatur des Elektrolyten und/oder Rührgeschwindigkeit während des galvanischen Prozesses in Abhängigkeit von Anzahl zu beschichtender Werkstücke und/oder Elektrolytmenge und/oder Elektrolylfüllstandshöhe auf einen konstanten oder auf einen sich während des Prozesses ändernden Wert eingestellt werden.

21. Verfahren nach einem der Ansprüche 12 bis 20, **dadurch gekennzeichnet,** **dass** auf einem Display die Menge von erforderlichem Elektrolyten zum Erreichen gewünschter abzuscheidender Schichtdicke auf einer bestimmten Fläche $A_F$ angezeigt wird.

22. Verfahren nach einem der Ansprüche 12 bis 21, **dadurch gekennzeichnet,** **dass** je nach Anzahl der Werkstücke die bevorzugt zu bestückenden Kathoden auf einem Display angezeigt bzw. hervorgehoben dargestellt werden.

23. Verfahren nach zumindest Anspruch 12, wobei als Werkstücke solche aus Gips verwendet werden, die mit einem die Fläche $A_F$ vorgebenden Leitlack versehen sind, **dadurch gekennzeichnet,** **dass** als Spülbad ein Gipslöser oder einen solchen enthaltend verwendet wird und dass das Spülbad auf eine Temperatur T mit 20 °C ≤ T ≤ 90 °C eingestellt wird.

24. Verfahren nach zumindest Anspruch 23, **dadurch gekennzeichnet,** **dass** das Spülbad auf eine Temperatur T mit 40 °C ≤ T ≤ 65 °C eingestellt wird, wobei das Spülbad gegebenenfalls mittels eines Rührers gemischt wird.

25. Verfahren nach zumindest Anspruch 23, **dadurch gekennzeichnet,** **dass** das Spülbad mit Ultraschall beaufschlagt wird.

26. Verfahren nach zumindest Anspruch 23, **dadurch gekennzeichnet,** **dass** als Gipslöser ein solcher verwendet wird, der Komplexbildner wie EDTA (Ethylendiamintetraessigsäure) und/oder deren Salze, gegebenenfalls in Kombination mit Säure wie Citronensäure und/oder Zuckerlösungen, gegebenenfalls in Kombination mit Citronensäure und/oder Säure und/oder Glycerin enthält.

27. Verfahren nach Anspruch 26, **dadurch gekennzeichnet,** **dass** der Gipslöser oder das diesen enthaltende Spülbad auf einen alkalischen pH-Wert von vorzugsweise 8 bis 11 eingestellt wird.

28. Verfahren nach zumindest Anspruch 23, **dadurch gekennzeichnet,** **dass** als Leitlack ein Silber- und/oder Goldleitlack verwendet wird.

Fig. 1

EP 1 464 734 A2

Fig. 2

Fig.3

EP 1 464 734 A2

Fig. 4

66

70

72

Fig. 5

Draufsicht

70

72 Fig. 6

72

66

64

Fig. 7

58

I[mA]

Fig. 9

Fig. 8